# FASCICULE DE BREVET EUROPEEN

(11) **EP 3 707 296 B1**
(45) Date de publication et mention de la délivrance du brevet: **13.10.2021**
(21) Numéro de dépôt: 18845297.3
(22) Date de dépôt: 18.12.2018
(51) Int. Cl.: H01M 8/12, C25B 15/08, C25B 1/04, H01M 8/247, H01M 8/2475, H01M 8/248, H01M 8/249, H01M 8/2432, C25B 9/70

(54) **ENSEMBLE D'UN EMPILEMENT À OXYDES SOLIDES DE TYPE SOEC/SOFC, D'UN SYSTÈME DE SERRAGE ET D'UN SYSTÈME DE COUPLAGE ÉTANCHE**
VOM TYP FESTOXID SOEC/SOFC, SPANNVORRICHTUNG UND DICHTES VERBINDUNGSSYSTEM
STACK ASSEMBLY OF SOLID OXIDE TYPE SOEC/SOFC, CLAMPING SYSTEM AND HERMETIC COUPLING SYSTEM

(30) Priorité: 19.12.2017 FR 1762507
(43) Date de publication de la demande: 16.09.2020
(73) Titulaire: Commissariat à l'énergie atomique et aux énergies alternatives, 75015 Paris (FR)
(72) Inventeur: BERNARD, Charlotte, 74130 Contamine Sur Arve (FR); PLANQUE, Michel, 38180 Seyssins (FR); ROUX, Guilhem, 38120 Saint-Egreve (FR)
(74) Mandataire: Brevalex
(86) Numéro de dépôt international: PCT/FR2018/053385
(87) Numéro de publication internationale: WO 2019/122697

(56) Documents cités:
- EP-A1- 2 860 807
- DE-A1- 4 217 892
- US-A1- 2010 143 759

## Description

### DOMAINE TECHNIQUE

La présente invention se rapporte au domaine général de l'électrolyse de l'eau à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de l'eau à haute température (EHT) avec le dioxyde de carbone (CO₂).

Plus précisément, l'invention se rapporte au domaine des électrolyseurs à oxydes solides à haute température, désignés habituellement par l'acronyme SOEC (pour « Solide Oxide Electrolyzer Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements à oxydes solides de type SOEC/SOFC fonctionnant à haute température.

Plus précisément, l'invention concerne un ensemble comprenant un empilement à oxydes solides de type SOEC/SOFC, un système de serrage de l'empilement et un système de couplage étanche à haute température de l'empilement, ainsi qu'un système comportant un tel ensemble et un système de chauffe couplé audit empilement par le biais d'un tel système de couplage.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) et en dioxygène (O₂), typiquement en air et en gaz naturel, à savoir par du méthane (CH₄). Par souci de simplicité, la description suivante privilégie le fonctionnement d'un électrolyseur à oxydes solides à haute température de type SOEC réalisant l'électrolyse de l'eau. Toutefois, ce fonctionnement est applicable à l'électrolyse du dioxyde de carbone (CO₂), voire encore de la co-électrolyse de l'eau à haute température (EHT) avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en œuvre l'électrolyse de l'eau à haute température (EHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, combinant ainsi la production de chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT; air et combustible dont l'hydrogène injecté et eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le carburant, tandis que le compartiment cathodique comporte le comburant.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

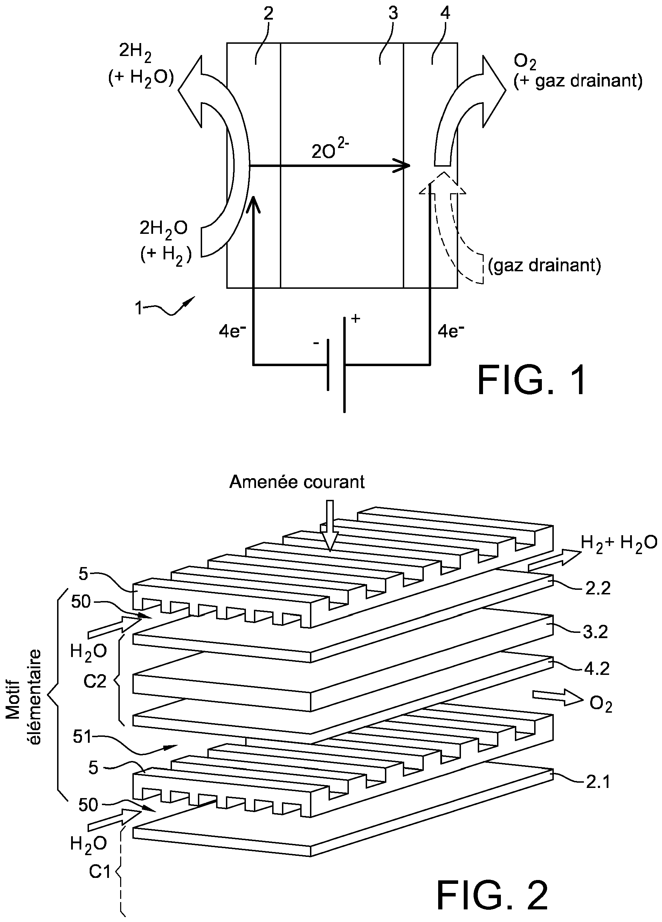

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂ + 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et des alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

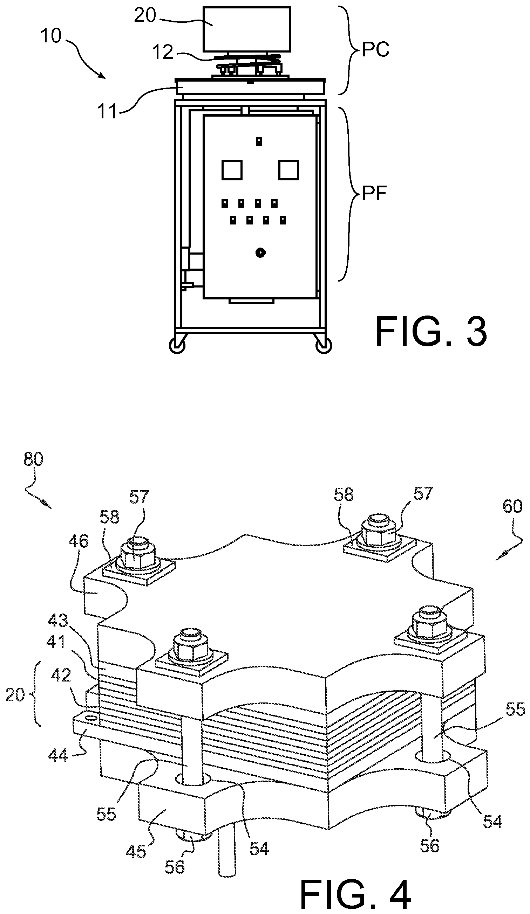

Les gaz entrants et sortants dans un empilement d'électrolyse à haute température (SOEC) ou de pile à combustible (SOFC) fonctionnant à haute température peuvent être gérés par le biais de dispositifs appropriés d'un four tel que celui illustré en référence à la figure 3.

Le four 10 comporte ainsi des parties froides PF et des parties chaudes PC, ces dernières comprenant la sole de four 11, un tube en boucle 12 pour gérer les entrées et sorties de gaz et l'empilement 20, encore appelé « stack », d'électrolyse à haute température (SOEC) ou de pile à combustible (SOFC).

Les couplages des dispositifs d'amenée et de sortie des gaz se font le plus souvent au niveau des parties froides PF, en particulier par des raccords de serrage mécanique double bague, des raccords à étanchéité de surface par joint métallique VCR®, des liaisons soudées ou encore des traversées étanches de cloisons.

Dans le cas des raccords de serrage mécanique double bague, les deux bagues séparent les fonctions d'étanchéité et de serrage de tube. La bague avant crée une étanchéité tandis que la bague arrière permet de faire avancer la bague avant axialement et applique un serrage effectif de tube radialement. Ce principe permet d'obtenir un très bon serrage de tube et une très bonne étanchéité aux fuites de gaz. De plus, son installation est facile et il présente une très bonne résistance à la fatigue causée par les vibrations. Le démontage est aisé en cas d'absence de soudage. Toutefois, ses inconvénients majeurs sont justement son absence de résistance aux hautes températures de sorte que la bague arrière, la bague avant et le tube peuvent se souder ensemble par soudage diffusion rendant la jonction indémontable.

Dans le cas des raccords à étanchéité de surface par joint métallique VCR®, l'étanchéité est obtenue lorsque le joint est compressé par deux bourrelets lors du serrage d'un écrou mâle ou d'un corps six pans avec un écrou femelle. Ce principe permet une très bonne étanchéité, la possibilité d'utiliser des joints différents (nickel, cuivre, inox, ...) selon la configuration la plus appropriée, et un montage/démontage facile avec changement du joint lors de ces opérations. Toutefois, cette solution ne convient pas à haute température, son fonctionnement ne permettant une température maximale que d'environ 537°C.

Dans le cas des liaisons soudées, une étanchéité totale est obtenue par le fait de souder les tubes entre eux par un procédé de type TIG (pour « Tungsten Inert Gas » en anglais) ou par soudeuse orbitale, c'est-à-dire un procédé TIG couplé à une buse rotative. Cependant, les opérations de soudure sur un empilement 20 monté dans un four 10 sont très compliquées du fait de l'accessibilité réduite pour pouvoir souder les tubes sur le pourtour.

Enfin, il existe un système de couplage résistant à une température d'environ 870°C, utilisant des traversées étanches de cloisons pour les passages de capteurs, sondes, signaux électriques et tubes. Ces traversées étanches de cloisons se présentent sous la forme d'un raccord fileté en inox 316L qui est à visser sur la paroi d'une tuyauterie, d'une cuve ou d'un couvercle. Selon leur version, ces traversées accueillent un ou plusieurs éléments traversants, de différents types, tailles et diamètres. Ces traversées permettent donc le passage d'éléments sans discontinuité et ne permettent pas la jonction étanche de deux éléments.

Les couplages des dispositifs d'amenée et de sortie des gaz au niveau des parties froides PF du four 10 constituent un inconvénient majeur car ces parties froides PF sont éloignées des résistances du four 10 et encombrées par les périphériques tels que les échangeurs, les isolants, les condenseurs, entre autres. Ceci implique de privilégier la réalisation des liaisons dans les parties chaudes PC en souhaitant pouvoir les rendre démontables et réutilisables facilement.

De plus, l'utilisation de l'enceinte du four 10 pour préchauffer les gaz d'entrée amène également à réaliser le tube en boucle 12, d'une longueur d'environ 2,5 à 3 m, pour utiliser le rayonnement des résistances chauffantes du four 10, ce qui ajoute de la complexité dans les cintrages pour faire en sorte que les tubes arrivent au bon endroit dans un espace confiné.

En outre, si l'on souhaite pouvoir démonter l'empilement 20 pour pouvoir le faire fonctionner à un autre emplacement, lui conférant alors un caractère de type « Plug & Play » (PnP), soit de type « branche et utilise », il faudrait d'abord rompre les liaisons mécaniquement, par exemple à l'aide d'une scie à métaux, et préparer les nouvelles liaisons pour mettre l'empilement 20 sur un autre four, ce qui complique grandement les manipulations.

Enfin, il est à noter qu'un tel empilement 20 est très fragile et il est nécessaire d'effectuer le moins d'opérations possibles lors d'un changement d'emplacement. Ainsi, il faut notamment pouvoir éviter les vibrations, les chocs et éviter aussi de le retourner.

Les solutions de couplage évoquées précédemment ne permettent pas de répondre aux besoins énoncés ci-dessus. En particulier, les raccords à serrage mécanique double bague se soudent à haute température. Les soudures ne répondent pas à la problématique évoquée du fait de la complexité du soudage (accès difficile) et elles n'évitent pas la découpe des tubes pour le démontage.

Les solutions de couplage de l'art antérieur ne permettent pas de retirer l'empilement 20 d'un four 10 pour le reconnecter sur un autre four 10, c'est-à-dire d'avoir un caractère « Plug & Play », sans rompre les jonctions mécaniquement, ce qui oblige les opérateurs chargés du montage/démontage à réaliser un travail fastidieux de cintrage, de couplage et d'adaptation.

### EXPOSÉ DE L'INVENTION

L'invention a pour but de remédier au moins partiellement aux besoins mentionnés précédemment et aux inconvénients relatifs aux réalisations de l'art antérieur.

Elle vise notamment la réalisation d'une conception particulière du couplage d'un empilement d'électrolyse à haute température (SOEC) ou de pile à combustible (SOFC), notamment pour un empilement présentant un caractère de type « Plug & Play » (PnP) (système auto-serrant), comme décrit dans la demande de brevet français FR 3 045 215 A1.

L'invention a ainsi pour objet, selon l'un de ses aspects, un ensemble, comportant :
- un empilement à oxydes solides de type SOEC/SOFC fonctionnant à haute température, comportant :
   - une pluralité de cellules électrochimiques formées chacune d'une cathode, d'une anode et d'un électrolyte intercalé entre la cathode et l'anode, et une pluralité d'interconnecteurs intermédiaires agencés chacun entre deux cellules électrochimiques adjacentes,
- un système de serrage de l'empilement à oxydes solides de type SOEC/SOFC, comportant une plaque de serrage supérieure et une plaque de serrage inférieure, entre lesquelles l'empilement à oxydes solides de type SOEC/SOFC est enserré, chaque plaque de serrage comportant au moins deux orifices de serrage, le système de serrage comportant en outre :
   - au moins deux tiges de serrage destinées à s'étendre chacune au travers d'un orifice de serrage de la plaque de serrage supérieure et au travers d'un orifice de serrage correspondant de la plaque de serrage inférieure pour permettre l'assemblage entre elles des plaques de serrage supérieure et inférieure,
   - des moyens de serrage au niveau de chaque orifice de serrage des plaques de serrage supérieure et inférieure destinés à coopérer avec lesdites au moins deux tiges de serrage pour permettre l'assemblage entre elles des plaques de serrage supérieure et inférieure,
- un système de couplage étanche à haute température dudit empilement à oxydes solides de type SOEC/SOFC à un système de chauffe, notamment un four, pour l'amenée et la sortie de gaz, le système de couplage étant avantageusement démontable et permettant avantageusement l'isolation électrique dudit empilement à oxydes solides de type SOEC/SOFC,
caractérisé en ce que le système de couplage comporte :
- un collecteur, ou encore manifold selon la dénomination anglaise, comprenant au moins deux conduits de collecte pour l'amenée et la sortie de gaz pourvus chacun d'un orifice de collecte positionné en vis-à-vis d'un orifice de communication correspondant d'au moins l'une des plaques de serrage supérieure et inférieure,
- au moins deux joints d'étanchéité (35) placés chacun entre un orifice de collecte (33) et un orifice de communication (34) correspondant.

L'ensemble selon l'invention peut en outre comporter l'une ou plusieurs des caractéristiques suivantes prises isolément ou suivant toutes combinaisons techniques possibles.

De façon avantageuse, les orifices de communication peuvent appartenir à la plaque de serrage inférieure du système de serrage. Ainsi, l'invention peut avantageusement utiliser la plaque de serrage inférieure de ce système de serrage pour permettre l'installation rapide de l'empilement sur le collecteur au sein du système et l'accouplement fluidique étanche et démontable dans le même temps.

Par ailleurs, de façon avantageuse, les joints d'étanchéité permettent d'assurer l'étanchéité entre l'empilement, ou stack, équipé de son système de serrage autonome et le collecteur. Les joints d'étanchéité peuvent notamment présenter une forme torique.

Le système de couplage est avantageusement démontable, et ainsi peut être réutilisé après cyclage thermique, seuls les joints d'étanchéité étant éventuellement remplacés à chaque démontage/remontage.

Le système de couplage permet avantageusement l'isolation électrique dudit empilement à oxydes solides de type SOEC/SOFC par rapport au reste de l'ensemble, en particulier le système de chauffe, ce qui n'est pas possible avec les solutions classiques de l'art antérieur de type raccord métallique double bague ou de type VCR®.

L'empilement à oxydes solides de type SOEC/SOFC peut comporter une plaque terminale supérieure et une plaque terminale inférieure, entre lesquelles la pluralité de cellules électrochimiques et la pluralité d'interconnecteurs intermédiaires sont enserrées.

Préférentiellement, lesdits au moins deux joints d'étanchéité peuvent être réalisés en mica. L'utilisation d'un joint d'étanchéité en mica présente de multiples avantages tels que détaillés ci-après. Tout d'abord, il permet d'assurer l'étanchéité des couplages d'amenée et de sortie des gaz entre l'empilement et le système de chauffe, tel qu'un four, sur une plage de températures pouvant s'étendre de 0°C à 900°C. La géométrie du joint d'étanchéité peut être optimisée afin d'assurer une contrainte de compression dans le mica qui soit suffisante pour assurer une étanchéité robuste. Cette contrainte dépend de l'épaisseur du mica. Aussi, par exemple, pour un joint d'étanchéité en mica d'environ 0,25 mm d'épaisseur, la contrainte de compression appliquée peut être d'au moins 13 MPa.

Par ailleurs, le joint d'étanchéité en mica permet d'isoler électriquement l'empilement par rapport au système de chauffe.

En outre, le joint d'étanchéité en mica permet une démontabilité/remontabilité répété du couplage en évitant le soudage des parties planes métalliques à haute température, ainsi que plusieurs cyclages thermiques.

L'épaisseur desdits au moins deux joints d'étanchéité en mica peut préférentiellement être inférieure ou égale à 0,3 mm. Une telle valeur de l'épaisseur des joints d'étanchéité en mica peut permettre d'obtenir une étanchéité réalisée à froid comme à chaud.

En variante, lesdits au moins deux joints d'étanchéité peuvent être réalisés en métal.

Par exemple, lesdits au moins deux joints d'étanchéité peuvent être des joints toriques de type bi-delta, présentant sensiblement en section une forme de rectangle dont les deux plus grands côtés opposés comportent chacun une portion annulaire en saillie sensiblement de forme triangulaire, les deux portions en saillie étant en superposition l'une de l'autre.

Lesdits au moins deux joints d'étanchéité peuvent encore être des joints toriques de type C-ring, présentant en section une forme de C.

Par ailleurs, les orifices de collecte desdits au moins deux conduits de collecte du collecteur peuvent être positionnés en vis-à-vis d'orifices de communication correspondants de la plaque de serrage inférieure de sorte que la contrainte appliquée sur lesdits au moins deux joints d'étanchéité pour l'étanchéité du couplage soit uniquement exercée par le poids de l'empilement équipé du système de serrage.

En outre, le collecteur peut comporter au moins un orifice de fixation traversant apte à être traversé entièrement par une tige de serrage du système de serrage. De plus, le système de couplage peut comporter un moyen de fixation du collecteur à ladite au moins l'une des plaques de serrage supérieure et inférieure coopérant avec la portion de la tige de serrage ayant traversée ledit au moins un orifice de fixation.

La tige de serrage peut avantageusement être filetée. De plus, le moyen de fixation peut être un écrou de fixation. La tige de serrage filetée et/ou l'écrou de fixation peuvent être enduits d'une pâte anti-grippante haute température.

Par ailleurs, lesdits au moins deux conduits de collecte du collecteur peuvent être chacun couplés à ladite au moins l'une des plaques de serrage supérieure et inférieure par le biais d'un raccord démontable et étanche.

Le raccord démontable et étanche peut être formé par un système de couplage étanche à haute température, comportant :
- une embase creuse au moins partiellement filetée sur sa surface extérieure dite embase filetée, solidarisée à ladite au moins l'une des plaques de serrage supérieure et inférieure et fixée sur un conduit de communication interne de l'empilement, l'embase filetée comportant un orifice de communication,
- une embase creuse de surface extérieure au moins partiellement lisse dite embase lisse, solidarisée au collecteur et fixée sur un conduit de collecte du collecteur, l'embase lisse comportant un orifice de collecte, l'embase lisse et l'embase filetée étant positionnées en vis-à-vis l'une de l'autre pour leur mise en communication fluidique,
- un écrou fileté, apte à coopérer avec l'embase filetée pour former un système vis/écrou et apte à coulisser par rapport à l'embase lisse, l'écrou fileté comprenant, sur sa surface intérieure, une première portion filetée coopérant avec le filetage de l'embase filetée et une deuxième portion lisse en contact coulissant sur la surface extérieure lisse de l'embase lisse.

Par ailleurs, l'embase lisse, l'écrou fileté et l'embase filetée peuvent être réalisés en superalliage à base de nickel, en particulier de type Inconel 600, et/ou en acier inoxydable austénitique, en particulier de type inox 316L.

En outre, l'invention a également pour objet, selon un autre de ses aspects, un système, caractérisé en ce qu'il comporte :
- un ensemble tel que défini précédemment,
- un système de chauffe, notamment un four, couplé audit empilement à oxydes solides de type SOEC/SOFC de l'ensemble par le biais du système de couplage de l'ensemble pour l'amenée et la sortie des gaz.

L'ensemble et le système selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 est une vue schématique montrant le principe de fonctionnement d'un électrolyseur à oxydes solides à haute température (SOEC),
- la figure 2 est une vue schématique éclatée d'une partie d'un électrolyseur à oxydes solides à haute température (SOEC) comprenant des interconnecteurs selon l'art antérieur,
- la figure 3 illustre le principe de l'architecture d'un four sur lequel un empilement d'électrolyse à haute température (SOEC) ou de pile à combustible (SOFC) fonctionnant à haute température est placé,
- la figure 4 représente, en perspective, un exemple d'un empilement à oxydes solides de type SOEC/SOFC avec son système de serrage pour un ensemble conforme à l'invention,
- les figures 5A, 5B et 5C représentent, respectivement selon une vue assemblée de côté, selon une vue en coupe partielle et selon une vue en perspective éclatée, un premier exemple de réalisation d'un ensemble conforme à l'invention,
- les figures 6A, 6B et 6C représentent, respectivement selon une vue assemblée de côté, selon une vue en coupe partielle et selon une vue en perspective éclatée, un deuxième exemple de réalisation d'un ensemble conforme à l'invention,
- les figures 7A, 7B et 7C représentent, respectivement selon une vue assemblée de côté, selon une vue en coupe partielle et selon une vue en perspective éclatée, un troisième exemple de réalisation d'un ensemble conforme à l'invention,
- les figures 8A et 8B illustrent, respectivement selon une vue en perspective et selon une vue en coupe partielle, une première alternative de joint d'étanchéité pour un ensemble conforme à l'invention, et
- la figure 9 illustre, selon une vue en perspective et en coupe partielle, une deuxième alternative de joint d'étanchéité pour un ensemble conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 à 3 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur » et « inférieur » sont à comprendre ici selon le sens d'orientation normal d'un empilement de type SOEC/SOFC.

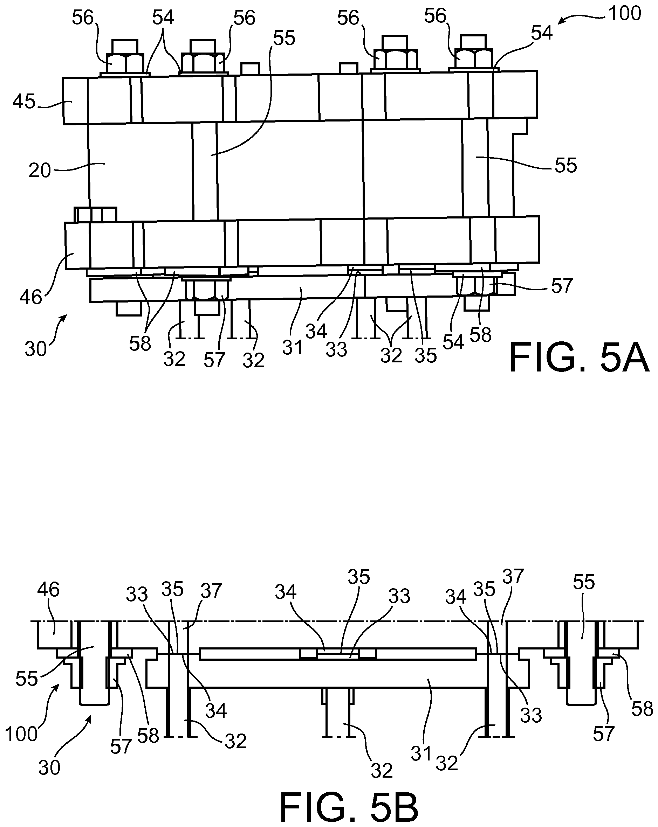

En référence à la figure 4, on a illustré un exemple d'assemblage 80 comprenant un empilement 20 à oxydes solides de type SOEC/SOFC et un système de serrage 60, cet assemblage 80 pouvant être intégré dans un ensemble 100 conforme à l'invention, comme décrit par la suite en référence aux figures 5A-5C, 6A-6C et 7A-7C .

De façon avantageuse, l'assemblage 80 présente une structure semblable à celle de l'ensemble décrit dans la demande de brevet français FR 3 045 215 A1, c'est-à-dire que l'empilement 20 présente un caractère de type « Plug & Play » (PnP).

Aussi, de façon commune aux différents modes de réalisation de l'invention décrits par la suite, et comme visible sur la figure 4, l'assemblage 80 comporte un empilement 20 à oxydes solides de type SOEC/SOFC fonctionnant à haute température.

Cet empilement 20 comporte une pluralité de cellules électrochimiques 41 formées chacune d'une cathode, d'une anode et d'un électrolyte intercalé entre la cathode et l'anode, et une pluralité d'interconnecteurs intermédiaires 42 agencés chacun entre deux cellules électrochimiques 41 adjacentes. Cet ensemble de cellules électrochimiques 41 et d'interconnecteurs intermédiaires 42 peut également être désigné par « stack ».

De plus, l'empilement 20 comporte une plaque terminale supérieure 43 et une plaque terminale inférieure 44, respectivement également dénommées plaque terminale de stack supérieure 43 et plaque terminale de stack inférieure 44, entre lesquelles la pluralité de cellules électrochimiques 41 et la pluralité d'interconnecteurs intermédiaires 42 sont enserrées, soit entre lesquelles se trouve le stack.

Par ailleurs, l'assemblage 80 comporte aussi un système de serrage 60 de l'empilement 20 à oxydes solides de type SOEC/SOFC, comportant une plaque de serrage supérieure 45 et une plaque de serrage inférieure 46, entre lesquelles l'empilement 20 à oxydes solides de type SOEC/SOFC est enserré.

Chaque plaque de serrage 45, 46 du système de serrage 60 comporte quatre orifices de serrage 54.

De plus, le système de serrage 60 comporte en outre quatre tiges de serrage 55, ou tirants, s'étendant au travers d'un orifice de serrage 54 de la plaque de serrage supérieure 45 et au travers d'un orifice de serrage 54 correspondant de la plaque de serrage inférieure 46 pour permettre l'assemblage entre elles des plaques de serrage supérieure 45 et inférieure 46.

Le système de serrage 60 comporte de plus des moyens de serrage 56, 57, 58 au niveau de chaque orifice de serrage 54 des plaques de serrage supérieure 45 et inférieure 46 coopérant avec les tiges de serrage 55 pour permettre l'assemblage entre elles des plaques de serrage supérieure 45 et inférieure 46.

Plus précisément, les moyens de serrage comportent, au niveau de chaque orifice de serrage 54 de la plaque de serrage supérieure 45, un premier écrou de serrage 56 coopérant avec la tige de serrage 55 correspondante insérée au travers de l'orifice de serrage 54. De plus, les moyens de serrage comportent, au niveau de chaque orifice de serrage 54 de la plaque de serrage inférieure 46, un deuxième écrou de serrage 57 associé à une rondelle de serrage 58, ceux-ci coopérant avec la tige de serrage 55 correspondante insérée au travers de l'orifice de serrage 54. La rondelle de serrage 58 est située entre le deuxième écrou de serrage 57 et la plaque de serrage inférieure 46.

L'ensemble 100 conforme à l'invention comporte par ailleurs un système de couplage 30 étanche à haute température de l'empilement 20 pour l'amenée et la sortie des gaz entre l'empilement 20 et le système de chauffe, en particulier un four 10 tel que décrit précédemment. Les figures 5A à 7C permettent de décrire différentes possibilités du système de couplage 30.

Aussi, conformément à l'invention, et de façon commune à tous les modes de réalisation de l'invention, le système de couplage 30 étanche à haute température de l'empilement 20 comporte un collecteur 31, ou encore appelé manifold selon la dénomination anglaise. Ce collecteur 31 comprend quatre conduits de collecte 32 pour l'amenée et la sortie de gaz. Chaque conduit de collecte 32 comporte un orifice de collecte 33 débouchant à la surface du collecteur 31 en vis-à-vis de la plaque de serrage inférieure 46.

Par ailleurs, la plaque de serrage inférieure 46 du système de serrage 60 autonome de l'empilement 20 comporte des orifices de communication 34 de conduits de communication internes 37 de l'empilement 20, comme visible par exemple sur les figures 5B, 6B et 7B.

De façon avantageuse, les orifices de collecte 33 sont positionnés en vis-à-vis des orifices de communication 34 de sorte à permettre le couplage fluidique entre l'empilement 20 et le collecteur 31 pour l'amenée et la sortie de gaz.

De plus, des joints d'étanchéité 35 sont avantageusement placés entre chaque orifice de collecte 33 et son orifice de communication 34 correspondant afin de garantir l'étanchéité du couplage.

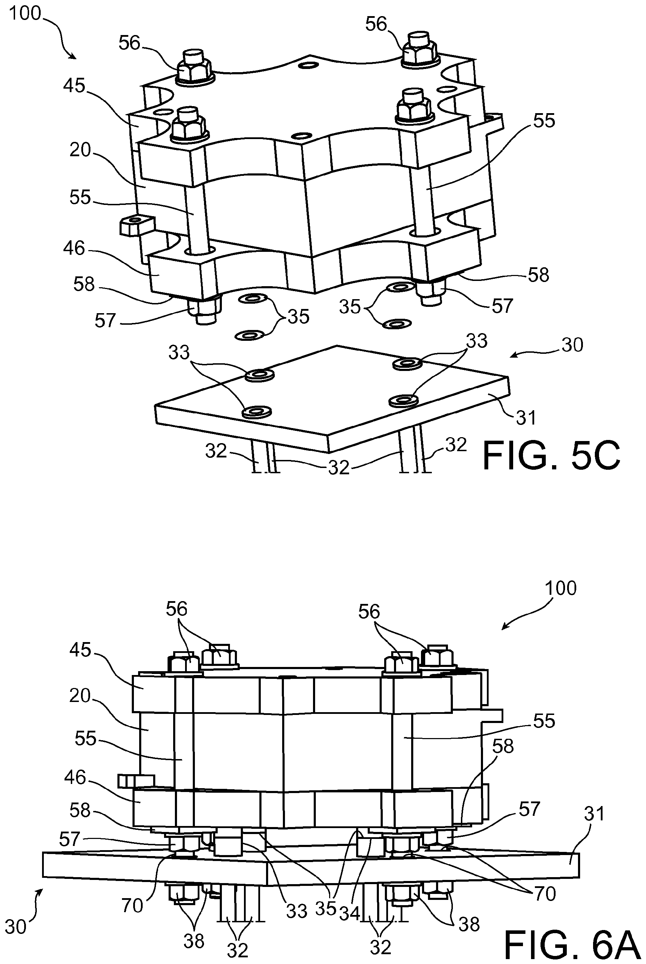

Les figures 5A, 5B et 5C représentent, respectivement selon une vue assemblée de côté, selon une vue en coupe partielle et selon une vue en perspective éclatée, un premier exemple de réalisation d'un ensemble 100 conforme à l'invention.

Dans ce premier exemple, les orifices de collecte 33 des conduits de collecte 32 du collecteur 31 sont positionnés en vis-à-vis des orifices de communication 34 correspondants de la plaque de serrage inférieure 46 de sorte que la contrainte appliquée sur les joints d'étanchéité 35 pour l'étanchéité du couplage soit uniquement exercée par le poids de l'empilement 20 équipé de son système de serrage 60 autonome.

Autrement dit, seul le poids du stack 20 et de son système de serrage 60 autonome est utilisé pour garantir l'étanchéité au niveau des joints d'étanchéité 35.

De façon avantageuse, il est ainsi possible de retirer et de mettre en place facilement l'empilement 20 dans le système, en ne changeant notamment uniquement que les joints d'étanchéité 35, notamment des joints en mica qui sont alors des consommables, et en assurant ainsi une étanchéité entre l'empilement 20 et le système qui soit satisfaisante.

Dans ce premier exemple de réalisation, seul le poids propre de l'empilement 20 équipé de son système de serrage 60 autonome est utilisé pour assurer l'étanchéité des couplages d'amenée et de sortie de gaz entre l'empilement 20 et le four 10, soit l'application d'une contrainte déterminée en fonction de l'épaisseur du matériau des joints d'étanchéité 35, notamment en mica, leur surface de contact et le poids de l'empilement 20 équipé du système de serrage 60.

Cependant, dans le cas où le poids propre de l'empilement 20 ne suffit pas à appliquer la contrainte nécessaire sur les joints d'étanchéité 35 pour assurer une étanchéité satisfaisante à haute température, soit notamment un flux de fuite mesuré inférieur à 2.10⁻⁵ Pa.m³.s⁻¹, alors une alternative de couplage peut être proposée comme selon les modes de réalisation décrits par la suite.

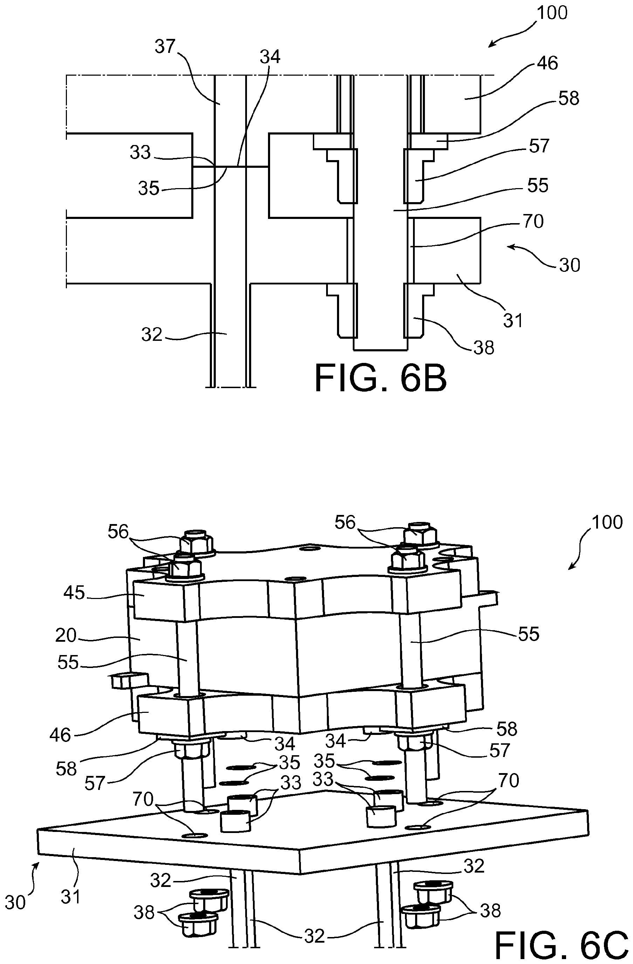

Ainsi, les figures 6A, 6B et 6C représentent, respectivement selon une vue assemblée de côté, selon une vue en coupe partielle et selon une vue en perspective éclatée, un deuxième exemple de réalisation d'un ensemble 100 conforme à l'invention.

Dans ce deuxième mode de réalisation, les tirants ou tiges de serrage 55 du système de serrage 60 autonome sont utilisés à profit pour permettre le couplage, étant notamment filetés sur leur intégralité. Ils peuvent ainsi être utilisés pour exercer un effort supplémentaire sur les joints d'étanchéité 35, contrôlé par le biais d'un couple de serrage déterminé sur des écrous de fixation 38.

Plus précisément, comme mieux visible sur la figure 6C, le collecteur 31 comporte quatre orifices de fixation traversants 70 dans lesquels sont insérées les quatre tiges de serrage 55 du système de serrage 60.

De plus, quatre écrous de fixation 38 sont utilisés pour être vissés sur les quatre tiges de serrage 55 afin d'assembler le collecteur 31 sur la plaque de serrage inférieure 46.

De façon avantageuse, des éléments d'isolation électrique (non représentés), tels que des éléments en mica ou en céramique, peuvent être insérés entre les écrous de fixation 38 reprenant l'effort sur les tiges de serrage 55, les tiges de serrage 55 et le collecteur 31 de sorte à pouvoir maintenir une isolation électrique de l'empilement 20 par rapport au système.

De façon avantageuse également, le filetage des tiges de serrage 55 et/ou des écrous de fixation 38 peut être enduit, avant mise en place et serrage du collecteur 31 sur les tiges de serrage 55, d'une pâte anti-grippante haute température qui peut faciliter le démontage et qui peut éviter un soudage diffusion des filets.

Cette pâte anti-grippante peut être telle qu'une pâte anti-grippante et lubrifiante d'assemblage pour hautes températures, résistante à la corrosion, permettant d'éviter le blocage et l'usure excessive de pièces exposées à des températures extrêmes ou en atmosphère agressive telles que : filetages de machines thermiques, tubulures pour gaz chauds, brûleurs, soupapes, freins à disques, bougies, attaches d'échappements, galets, boulons, collets, entre autres. Elle peut avoir une formulation à base de cuivre, aluminium et graphite de sorte à protéger les pièces métalliques et assurer leur démontage. Il peut par exemple s'agir de la graisse verte commercialisée par la société Pyrox Thermique Matériaux consistant en un mélange à 50 % de poudre de chrome 3 et de graisse au cuivre pour pièces mécaniques commercialisée par la société Würth.

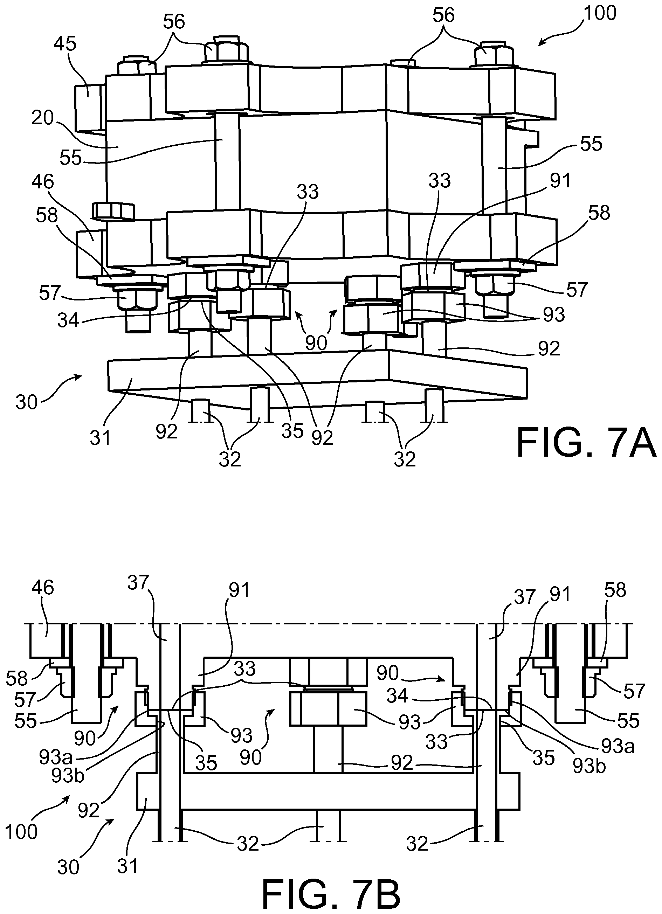

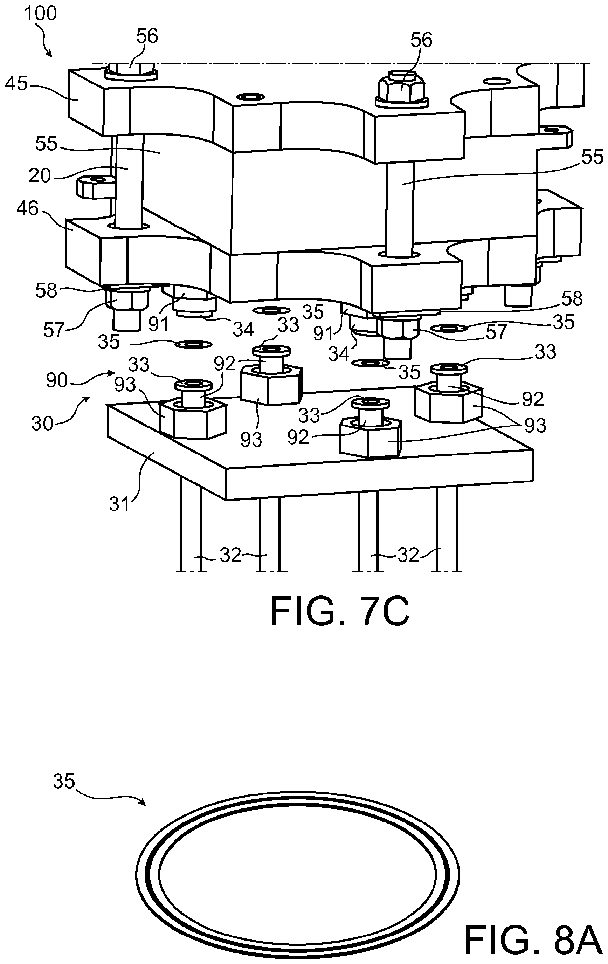

En outre, les figures 7A, 7B et 7C représentent, respectivement selon une vue assemblée de côté, selon une vue en coupe partielle et selon une vue en perspective éclatée, un troisième exemple de réalisation d'un ensemble 100 conforme à l'invention.

Dans ce troisième exemple, les quatre conduits de collecte 32 du collecteur 31 sont couplés à la plaque de serrage inférieure 46 du système de serrage 60 par le biais de raccords démontables et étanches 90. De tels raccords sont en particulier tels que décrits dans la demande de brevet français n°17 50009.

Plus précisément, chaque raccord démontable et étanche 90 est formé par un système de couplage étanche à haute température. Ce système comporte tout d'abord une embase creuse 91 partiellement filetée sur sa surface extérieure dite embase filetée, laquelle est solidarisée à la plaque de serrage inférieure 46 et fixée sur un conduit de communication interne 37 de l'empilement 20. De plus, l'embase filetée 91 comporte un orifice de communication 34 tel que décrit précédemment.

En outre, le système comporte également une embase creuse 92 de surface extérieure lisse dite embase lisse, laquelle est solidarisée au collecteur 31 et fixée sur un conduit de collecte 32 du collecteur 31. De plus, l'embase lisse 92 comporte un orifice de collecte 33 tel que décrit précédemment.

Ainsi, l'embase lisse 92 et l'embase filetée 91 sont positionnées en vis-à-vis l'une de l'autre pour leur mise en communication fluidique.

Enfin, le système comporte un écrou fileté 93, apte à coopérer avec l'embase filetée 91 pour former un système vis/écrou et apte à coulisser par rapport à l'embase lisse 92. Comme visible sur la figure 7B, cet écrou fileté 93)comprend, sur sa surface intérieure, une première portion filetée 93a coopérant avec le filetage de l'embase filetée 91 et une deuxième portion lisse 93b en contact coulissant sur la surface extérieure lisse de l'embase lisse 92.

Avantageusement, l'embase lisse 92, l'écrou fileté 93 et l'embase filetée 91 peuvent être réalisés en superalliage à base de nickel, en particulier de type Inconel 600, et/ou en acier inoxydable austénitique, en particulier de type inox 316L.

L'embase filetée 91 peut être rapportée soudée ou bien être usinée dans la plaque de serrage inférieure 46 du système de serrage 60 lors de sa fabrication de sorte qu'elle puisse faire partie de l'assemblage 80 comprenant l'empilement 20 et le système de serrage 60.

L'écrou fileté 93 peut quant à lui être avantageusement solidaire du collecteur 31 et peut constituer le plan d'appui de l'empilement 20 par le biais de l'embase lisse 92. L'écrou fileté 93 est monté coulissant sur l'embase lisse 92 avec du jeu.

L'embase lisse 92 peut quant à elle être rapportée soudée sur le collecteur 31.

Il est donc possible d'obtenir un contact de type plan/plan entre l'embase lisse 92 du collecteur 31 et l'embase filetée 91 de la plaque de serrage inférieure 46, un joint d'étanchéité 35 étant inséré entre les deux embases 91 et 92 pour assurer l'étanchéité du couplage vis/écrou. C'est ainsi le couple de serrage vis/écrou qui permet d'assurer la contrainte nécessaire à l'étanchéité sur le joint d'étanchéité 35.

Il est également possible d'insérer un deuxième joint d'étanchéité 35, notamment une seconde rondelle de mica, entre l'écrou fileté 93 et l'embase lisse 92 afin de garantir une isolation électrique de l'empilement 20 si nécessaire.

Le diamètre nominal de l'écrou fileté 93 peut être compris entre M20 et M30. En effet, des filets épais et un pas important peuvent permettre d'éviter un soudage diffusion entre les filets.

Par ailleurs, l'embase filetée 91 peut présenter une hauteur comprise entre 15 et 30 mm, et peut présenter un diamètre compris entre 20 et 30 mm.

De plus, l'embase lisse 92 peut présenter une hauteur comprise entre 45 et 70 mm, et peut présenter un diamètre maximum de 30 mm.

La première portion filetée 93a de l'écrou fileté 93 et/ou le filetage de l'embase filetée 91 peuvent en outre être recouverts d'un agent anti-grippant résistant à haute température. Cet agent anti-grippant peut être telle que la pâte anti-grippante décrite précédemment destinée à enduire le filetage des tiges de serrage 55 et/ou des écrous de fixation 38.

Dans tous les exemples précédemment décrits, les joints d'étanchéité 35 sont préférentiellement réalisés en mica.

Cependant, il est également possible de prévoir des joints d'étanchéité 35 qui soient réalisés en un autre matériau, et par exemple des joints d'étanchéité toriques métalliques.

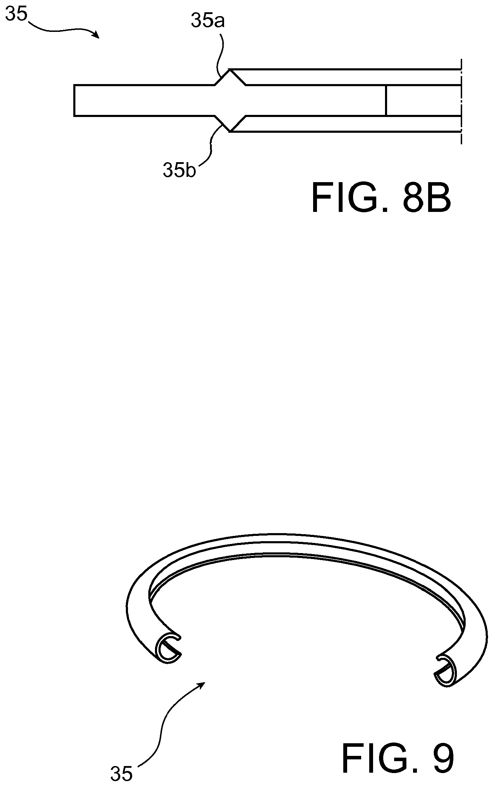

Les figures 8A et 8B illustrent par exemple la possibilité d'avoir un joint d'étanchéité torique 35 de type bi-delta. Comme visible sur la figure 8B, ce joint de type bi-delta se caractérise en ce qu'il présente sensiblement en section une forme de rectangle dont les deux plus grands côtés opposés comportent chacun une portion annulaire en saillie 35a sensiblement de forme triangulaire. De plus, ces deux portions en saillie 35 sont en superposition l'une de l'autre.

La figure 9 illustre par ailleurs la possibilité d'avoir un joint d'étanchéité torique 35 qui se présente sous la forme d'un joint de type C-ring, c'est-à-dire qu'il présente en section une forme de C.

Bien entendu, l'invention n'est pas limitée aux exemples de réalisation qui viennent d'être décrits. Diverses modifications peuvent y être apportées par l'homme du métier, dans les limites définies par les revendications.

## Revendications

1. Ensemble (100), comportant :
- un empilement (20) à oxydes solides de type SOEC/SOFC fonctionnant à haute température, comportant :
- une pluralité de cellules électrochimiques (41) formées chacune d'une cathode, d'une anode et d'un électrolyte intercalé entre la cathode et l'anode, et une pluralité d'interconnecteurs intermédiaires (42) agencés chacun entre deux cellules électrochimiques (41) adjacentes,
- un système de serrage (60) de l'empilement (20) à oxydes solides de type SOEC/SOFC, comportant une plaque de serrage supérieure (45) et une plaque de serrage inférieure (46), entre lesquelles l'empilement (20) à oxydes solides de type SOEC/SOFC est enserré, chaque plaque de serrage (45, 46) comportant au moins deux orifices de serrage (54), le système de serrage (60) comportant en outre :
- au moins deux tiges de serrage (55) destinées à s'étendre chacune au travers d'un orifice de serrage (54) de la plaque de serrage supérieure (45) et au travers d'un orifice de serrage (54) correspondant de la plaque de serrage inférieure (46) pour permettre l'assemblage entre elles des plaques de serrage supérieure (45) et inférieure (46),
- des moyens de serrage (56, 57, 58) au niveau de chaque orifice de serrage (54) des plaques de serrage supérieure (45) et inférieure (46) destinés à coopérer avec lesdites au moins deux tiges de serrage (55) pour permettre l'assemblage entre elles des plaques de serrage supérieure (45) et inférieure (46),
- un système de couplage (30) étanche à haute température dudit empilement (20) à oxydes solides de type SOEC/SOFC à un système de chauffe (10) pour l'amenée et la sortie de gaz, le système de couplage (30) étant démontable et permettant l'isolation électrique dudit empilement (20) à oxydes solides de type SOEC/SOFC, **caractérisé en ce que** le système de couplage (30) comporte :
- un collecteur (31), comprenant au moins deux conduits de collecte (32) pour l'amenée et la sortie de gaz pourvus chacun d'un orifice de collecte (33) positionné en vis-à-vis d'un orifice de communication (34) correspondant d'au moins l'une des plaques de serrage supérieure (45) et inférieure (46),
- au moins deux joints d'étanchéité (35) placés chacun entre un orifice de collecte (33) et un orifice de communication (34) correspondant.

2. Ensemble selon la revendication 1, **caractérisé en ce que** lesdits au moins deux joints d'étanchéité (35) sont réalisés en mica.

3. Ensemble selon la revendication 2, **caractérisé en ce que** l'épaisseur desdits au moins deux joints d'étanchéité (35) en mica est inférieure ou égale à 0,3 mm.

4. Ensemble selon la revendication 1, **caractérisé en ce que** lesdits au moins deux joints d'étanchéité (35) sont réalisés en métal.

5. Ensemble selon la revendication 4, **caractérisé en ce que** lesdits au moins deux joints d'étanchéité (35) sont des joints toriques de type bi-delta, présentant sensiblement en section une forme de rectangle dont les deux plus grands côtés opposés comportent chacun une portion annulaire en saillie (35a) sensiblement de forme triangulaire, les deux portions en saillie (35a) étant en superposition l'une de l'autre.

6. Ensemble selon la revendication 4, **caractérisé en ce que** lesdits au moins deux joints d'étanchéité (35) sont des joints toriques de type C-ring, présentant en section une forme de C.

7. Ensemble selon l'une quelconque des revendications précédentes, **caractérisé en ce que** les orifices de collecte (33) desdits au moins deux conduits de collecte (32) du collecteur (31) sont positionnés en vis-à-vis d'orifices de communication (34) correspondants de la plaque de serrage inférieure (46) de sorte que la contrainte appliquée sur lesdits au moins deux joints d'étanchéité (35) pour l'étanchéité du couplage soit uniquement exercée par le poids de l'empilement (20) équipé du système de serrage (60).

8. Ensemble selon l'une quelconque des revendications 1 à 7, **caractérisé en ce que** le collecteur (31) comporte au moins un orifice de fixation traversant (70) apte à être traversé entièrement par une tige de serrage (55) du système de serrage (60), et **en ce que** le système de couplage (30) comporte un moyen de fixation (38) du collecteur (31) à ladite au moins l'une des plaques de serrage supérieure (45) et inférieure (46) coopérant avec la portion de la tige de serrage (55) ayant traversée ledit au moins un orifice de fixation (70).

9. Ensemble selon la revendication 8, **caractérisé en ce que** la tige de serrage (55) est filetée et **en ce que** le moyen de fixation (38) est un écrou de fixation.

10. Ensemble selon la revendication 9, **caractérisé en ce que** la tige de serrage filetée (55) et/ou l'écrou de fixation (38) sont enduits d'une pâte anti-grippante haute température.

11. Ensemble selon l'une quelconque des revendications précédentes, **caractérisé en ce que** lesdits au moins deux conduits de collecte (32) du collecteur (31) sont chacun couplés à ladite au moins l'une des plaques de serrage supérieure (45) et inférieure (46) par le biais d'un raccord démontable et étanche (90).

12. Ensemble selon la revendication 11, **caractérisé en ce que** le raccord démontable et étanche (90) est formé par un système de couplage étanche à haute température, comportant :
- une embase creuse (91) au moins partiellement filetée sur sa surface extérieure dite embase filetée, solidarisée à ladite au moins l'une des plaques de serrage supérieure (45) et inférieure (46) et fixée sur un conduit de communication interne (37) de l'empilement (20), l'embase filetée (91) comportant un orifice de communication (34),
- une embase creuse (92) de surface extérieure au moins partiellement lisse dite embase lisse, solidarisée au collecteur (31) et fixée sur un conduit de collecte (32) du collecteur (31), l'embase lisse (92) comportant un orifice de collecte (33), l'embase lisse (92) et l'embase filetée (91) étant positionnées en vis-à-vis l'une de l'autre pour leur mise en communication fluidique,
- un écrou fileté (93), apte à coopérer avec l'embase filetée (91) pour former un système vis/écrou et apte à coulisser par rapport à l'embase lisse (92), l'écrou fileté (93) comprenant, sur sa surface intérieure, une première portion filetée (93a) coopérant avec le filetage de l'embase filetée (91) et une deuxième portion lisse (93b) en contact coulissant sur la surface extérieure lisse de l'embase lisse (92).

13. Ensemble selon la revendication 12, **caractérisé en ce que** l'embase lisse (92), l'écrou fileté (93) et l'embase filetée (91) sont réalisés en superalliage à base de nickel, en particulier de type Inconel 600, et/ou en acier inoxydable austénitique, en particulier de type inox 316L.

14. Système, **caractérisé en ce qu'**il comporte :
- un ensemble (100) selon l'une quelconque des revendications précédentes,
- un système de chauffe (10), notamment un four, couplé audit empilement (20) à oxydes solides de type SOEC/SOFC de l'ensemble (100) par le biais du système de couplage (30) de l'ensemble (100) pour l'amenée et la sortie des gaz.

## Patentansprüche

1. Anordnung (100), enthaltend:
- einen Festoxidstapel (20) vom SOEC/SOFC-Typ, der bei hoher Temperatur arbeitet, umfassend:
- eine Vielzahl von elektrochemischen Zellen (41), die jeweils aus einer Kathode, einer Anode und einem zwischen Kathode und Anode angeordneten Elektrolyten bestehen, und eine Vielzahl von dazwischenliegenden Zwischenverbindern (42), die jeweils zwischen zwei benachbarten elektrochemischen Zellen (41) angeordnet sind,
- ein Klemmsystem (60) für den SOEC/SOFC-Festoxidstapel (20), das eine obere Klemmplatte (45) und eine untere Klemmplatte (46) aufweist, zwischen denen der SOEC/SOFC-Festoxidstapel (20) eingeklemmt ist, wobei jede Klemmplatte (45, 46) mindestens zwei Klemmöffnungen (54) umfasst, wobei das Klemmsystem (60) ferner enthält:
- mindestens zwei Klemmstifte (55), die dazu bestimmt sind, sich jeweils durch eine Klemmöffnung (54) der oberen Klemmplatte (45) und durch eine entsprechende Klemmöffnung (54) der unteren Klemmplatte (46) zu erstrecken, um das Zusammenfügen der oberen (45) und der unteren (46) Klemmplatte zu ermöglichen,
- Klemmmittel (56, 57, 58) an jeder Klemmöffnung (54) der oberen (45) und unteren (46) Klemmplatte zum Zusammenwirken mit den mindestens zwei Klemmstiften (55), um das Zusammenfügen der oberen (45) und unteren (46) Klemmplatte zu ermöglichen,
- ein Hochtemperatur-Dichtungs-Kopplungssystem (30) zum Koppeln des SOEC/SOFC-Festoxidstapels (20) an ein Heizsystem (10) für die Zufuhr und Ableitung von Gas, wobei das Kopplungssystem (30) abnehmbar ist und die elektrische Isolierung des SOEC/SOFC-Festoxidstapels (20) ermöglicht, **dadurch gekennzeichnet, dass** das Kopplungssystem (30) enthält:
- einen Kollektor (31), der mindestens zwei Sammelleitungen (32) für die Zufuhr und Ableitung von Gas aufweist, die jeweils mit einer Sammelöffnung (33) versehen sind, die gegenüber einer entsprechenden Verbindungsöffnung (34) von mindestens einer aus oberer (45) und unterer (46) Klemmplatte angeordnet ist,
- mindestens zwei Dichtungen (35), die jeweils zwischen einer Sammelöffnung (33) und einer entsprechenden Verbindungsöffnung (34) angeordnet sind.

2. Anordnung nach Anspruch 1, **dadurch gekennzeichnet, dass** die mindestens zwei Dichtungen (35) aus Glimmer hergestellt sind.

3. Anordnung nach Anspruch 2, **dadurch gekennzeichnet, dass** die Dicke der mindestens zwei Glimmerdichtungen (35) kleiner als oder gleich 0,3 mm ist.

4. Anordnung nach Anspruch 1, **dadurch gekennzeichnet, dass** die mindestens zwei Dichtungen (35) aus Metall hergestellt sind.

5. Anordnung nach Anspruch 4, **dadurch gekennzeichnet, dass** die mindestens zwei Dichtungen (35) O-Ringe vom Typ Bi-Delta-Typ, die im Querschnitt im Wesentlichen eine rechteckige Form aufweisen, deren zwei gegenüberliegende größere Seiten jeweils einen ringförmigen vorstehenden Abschnitt (35a) von im Wesentlichen dreieckiger Form aufweisen, wobei die beiden vorstehenden Abschnitte (35a) übereinander liegen.

6. Anordnung nach Anspruch 4, **dadurch gekennzeichnet, dass** die mindestens zwei Dichtungen (35) O-Ringe vom Typ C-Ring sind, die im Querschnitt C-förmig sind.

7. Anordnung nach einem der vorhergehenden Ansprüche, **dadurch gekennzeichnet, dass** die Sammelöffnungen (33) der mindestens zwei Sammelleitungen (32) des Kollektors (31) gegenüber den entsprechenden Verbindungsöffnungen (34) der unteren Klemmplatte (46) angeordnet sind, so dass die auf die mindestens zwei Dichtungen (35) für die Abdichtung der Kopplung ausgeübte Spannung ausschließlich durch die Gewichtskraft des mit dem Klemmsystem (60) ausgestatteten Stapels (20) ausgeübt wird.

8. Anordnung nach einem der Ansprüche 1 bis 7, **dadurch gekennzeichnet, dass** der Kollektor (31) mindestens eine durchgehende Befestigungsöffnung (70) aufweist, die von einem Klemmstift (55) des Klemmsystems (60) vollständig durchsetzt werden kann, und dass das Kopplungssystem (30) ein Mittel (38) zur Befestigung des Kollektors (31) an mindestens einer aus oberer (45) und unterer (46) Klemmplatte aufweist, das mit dem Abschnitt des Klemmstifts (55) zusammenwirkt, der sich durch die mindestens eine Befestigungsöffnung (70) hindurch erstreckt.

9. Anordnung nach Anspruch 8, **dadurch gekennzeichnet, dass** der Klemmstift (55) mit einem Gewinde versehen ist und dass das Befestigungsmittel (38) eine Befestigungsmutter ist.

10. Anordnung nach Anspruch 9, **dadurch gekennzeichnet, dass** der Gewindeklemmstift (55) und/oder die Befestigungsmutter (38) mit einer Hochtemperatur-Gleitmittel-Paste beschichtet sind.

11. Anordnung nach einem der vorhergehenden Ansprüche, **dadurch gekennzeichnet, dass** die mindestens zwei Sammelleitungen (32) des Kollektors (31) jeweils mit mindestens einer aus oberer (45) und unterer (46) Klemmplatte mittels eines abnehmbaren und abgedichteten Anschlusses (90) gekoppelt sind.

12. Anordnung nach Anspruch 11, **dadurch gekennzeichnet, dass** der abnehmbare und abgedichtete Anschluss (90) durch ein Hochtemperatur-Dichtungs-Kopplungssystem gebildet ist, enthaltend:
- einen hohl ausgeführten Sockel (91), der an seiner Außenfläche zumindest teilweise mit einem Gewinde versehen ist, Gewindesockel genannt, der mit der zumindest einen aus oberer (45) und unterer (46) Klemmplatte fest verbunden ist und an einer inneren Verbindungsleitung (37) des Stapels (20) befestigt ist, wobei der Gewindesockel (91) eine Verbindungsöffnung (34) aufweist,
- einen hohl ausgeführten Sockel (92) mit einer zumindest teilweise glatten Außenfläche, Glattsockel genannt wird, der mit dem Kollektor (31) fest verbunden ist und an einer Sammelleitung (32) des Kollektors (31) befestigt ist, wobei der Glattsockel (92) eine Sammelöffnung (33) aufweist, wobei der Glattsockel (92) und der Gewindesockel (91) zu deren Strömungsverbindung einander gegenüberliegend angeordnet sind,
- eine Gewindemutter (93), die mit dem Gewindesockel (91) zusammenzuwirken kann, um ein Schrauben-Mutter-System zu bilden, und die in Bezug auf den Glattsockel (92) gleitbeweglich ist, wobei die Gewindemutter (93) an ihrer Innenfläche einen ersten Gewindeabschnitt (93a), der mit dem Gewinde des Gewindesockels (91) zusammenwirkt, und einen zweiten glatten Abschnitt (93b) in Gleitkontakt mit der glatten Außenfläche des Glattsockels (92) aufweist.

13. Anordnung nach Anspruch 12, **dadurch gekennzeichnet, dass** der Glattsockel (92), die Gewindemutter (93) und der Gewindesockel (91) aus einer Superlegierung auf Nickelbasis, insbesondere vom Typ Inconel 600, und/oder aus austenitischem rostfreiem Stahl, insbesondere vom Typ rostfreier Stahl 316L, hergestellt sind.

14. System, **dadurch gekennzeichnet, dass** es enthält:
- eine Anordnung (100) nach einem der vorhergehenden Ansprüche,
- ein Heizsystem (10), insbesondere einen Ofen, der mit dem SOEC/SOFC-Festoxidstapel (20) der Anordnung (100) über das Kopplungssystem (30) der Anordnung (100) für die Zufuhr und Ableitung von Gasen gekoppelt ist.

## Claims

1. An assembly (100), including:
- an SOEC/SOFC-type solid oxide stack (20) operating at a high temperature, including:
- a plurality of electrochemical cells (41) each formed by a cathode, an anode and an electrolyte interposed between the cathode and the anode, and a plurality of intermediate interconnectors (42) each arranged between two adjacent electrochemical cells (41),
- a clamping system (60) for the SOEC/SOFC-type solid oxide stack (20), including an upper clamping plate (45) and a lower clamping plate (46), between which the SOEC/SOFC-type solid oxide stack (20) is sandwiched, each clamping plate (45, 46) including at least two clamping holes (54), the clamping system (60) further including:
- at least two clamping rods (55) each for extending through a clamping hole (54) of the upper clamping plate (45) and through a corresponding clamping hole (54) of the lower clamping plate (46) for assembling the upper (45) and lower (46) clamping plates to each other,
- clamping means (56, 57, 58) at each clamping hole (54) of the upper (45) and lower (46) clamping plates for cooperating with said at least two clamping rods (55) for assembling the upper (45) and lower (46) clamping plates therebetween,
- a high temperature sealed coupling system (30) for coupling said SOEC/SOFC-type solid oxide stack (20) to a heating system (10) for gas feed and outlet, the coupling system (30) being detachable and enabling said SOEC/SOFC-type solid oxide stack (20) to be electrically insulated,
**characterised in that** the coupling system (30) includes:
- a collector (31), comprising at least two collecting ducts (32) for gas feed and outlet each provided with a collecting hole (33) positioned facing a corresponding communication hole (34) of at least one of the upper (45) and lower (46) clamping plates,
- at least two seals (35) each placed between a collecting hole (33) and a corresponding communication hole (34).

2. The assembly according to claim 1, **characterised in that** said at least two seals (35) are made of mica.

3. The assembly according to claim 2, **characterised in that** the thickness of said at least two mica seals (35) is lower than or equal to 0.3mm.

4. The assembly according to claim 1, **characterised in that** said at least two seals (35) are made of metal.

5. The assembly according to claim 4, **characterised in that** said at least two seals (35) are bi-delta type O-ring seals, having a substantially rectangle shaped cross-section both opposite longer sides of which each include a substantially triangular-shaped projecting annular portion (35a), both projecting portions (35a) being superimposed on each other.

6. The assembly according to claim 4, **characterised in that** said at least two seals (35) are C-ring type seals, having a C-shaped cross-section.

7. The assembly according to any of the preceding claims, **characterised in that** the collecting holes (33) of said at least two collecting ducts (32) of the collector (31) are positioned facing corresponding communication holes (34) of the lower clamping plate (46) such that the stress applied to said at least two seals (35) for coupling sealing is only exerted by the weight of the stack (20) equipped with the clamping system (60).

8. The assembly according to any of claims 1 to 7, **characterised in that** the collector (31) includes at least one securing through hole (70) through which a clamping rod (55) of the clamping system (60) can completely pass, and **in that** the coupling system (30) includes a securing means (38) for securing the collector (31) to said at least one of the upper (45) and lower (46) clamping plates cooperating with the portion of the clamping rod (55) having passed through said at least one securing hole (70).

9. The assembly according to claim 8, **characterised in that** the clamping rod (55) is threaded and **in that** the securing means (38) is a securing nut.

10. The assembly according to claim 9, **characterised in that** the threaded clamping rod (55) and/or the securing nut (38) are coated with a high temperature anti-seize paste.

11. The assembly according to any of the preceding claims, **characterised in that** said at least two collecting ducts (32) of the collector (31) are each coupled with said at least one of the upper (45) and lower (46) clamping plates through a sealed detachable connector (90).

12. The assembly according to claim 11, **characterised in that** the sealed detachable connector (90) is formed by a high temperature sealed coupling system, including:
- a hollow base (91) at least partially threaded on its external surface called a threaded base, made integral with said at least one of the upper (45) and lower (46) clamping plates and secured to an inner communication duct (37) of the stack (20), the threaded base (91) including a communication hole (34),
- a hollow base (92) having an at least partially smooth external surface called a smooth base, made integral with the collector (31) and secured to a collecting duct (32) of the collector (31), the smooth base (92) including a collecting hole (33), the smooth base (92) and the threaded base (91) being positioned facing each other for being fluidly communicated with each other,
- a threaded nut (93), able to cooperate with the threaded base (91) to form a screw/nut system and able to slide with respect to the smooth base (92), the threaded nut (93) including, on its internal surface, a first threaded portion (93a) cooperating with the thread of the threaded base (91) and a second smooth portion (93b) in slidable contact on the smooth external surface of the smooth base (92).

13. The assembly according to claim 12, **characterised in that** the smooth base (92), the threaded nut (93) and the threaded base (91) are made of a nickel-based superalloy, in particular of the Inconel 600, and/or austenitic stainless steel, in particular stainless steel 316L type.

14. A system, **characterised in that** it includes:
- an assembly (100) according to any of the preceding claims,
- a heating system (10), specially an oven, coupled with said SOEC/SOFC-type solid oxide stack (20) of the assembly (100) through the coupling system (30) of the assembly (100) for gas feed and outlet.
